# EUROPEAN PATENT APPLICATION

(11) **EP 3 349 466 A1**
(43) Date of publication of application: **18.07.2018**
(21) Application number: 17305031.1
(22) Date of filing: 11.01.2017
(51) Int. Cl.: H04N 19/70, H04N 19/117, H04N 19/463, H04N 19/186, H04N 19/82

(54) **METHOD AND APPARATUS FOR VIDEO CODING WITH MULTI-PASS SAMPLE ADAPTIVE OFFSET FILTERING**

(71) Applicant: Thomson Licensing, 92130 Issy-les-Moulineaux (FR)
(72) Inventor: BORDES, Philippe, 35576 Cesson-Sévigné (FR); RACAPE, Fabien, 35576 Cesson-Sévigné (FR); GALPIN, Franck, 35576 Cesson-Sévigné (FR)
(74) Representative: Huchet, Anne

(57) **Abstract**

In multi-pass SAO filtering, the output filtered samples of a previous SAO pass becomes input to the current SAO pass. We observe that different SAO passes demonstrate different statistics. Therefore, we propose to use different syntax structures for different passes. In one embodiment, in the first pass, we still use sao_type_idx_luma and sao_type_idx _chroma flags to indicate the SAO types for luma and chroma components, respectively, and in the subsequent passes, we propose to use an additional flag to indicate whether the SAO filtering is turned off for both luma and chroma components. Also, instead of coding syntax element sao_type_idx_chroma itself, we may code (sao_type_idx_chroma - 1) at the encoder side and add "1" back at the decoder side, when both sao_type_idx_off and sao_type_idx_luma are zero.

## Description

### TECHNICAL FIELD

The present embodiments generally relate to a method and an apparatus for video encoding and decoding, and more particularly, to a method and an apparatus for video encoding and decoding with multi-pass Sample Adaptive Offset (SAO) filtering.

### BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

In video encoding or decoding, in-loop filtering can be applied after reconstruction of the coding blocks. The filtered reconstructed picture can be stored in the decoded picture buffer for output and for prediction if indicated. Different in-loop filters can be used. For example, in High Efficiency Video Coding (HEVC), two consecutive in-loop filters are specified. First, a deblocking filter is applied to block edges in order to reduce the amount of visible blockiness artifacts. In addition, SAO filtering is applied. SAO classifies reconstructed samples into different categories, obtains an offset for each category, and then adds the offset to each sample of the category. SAO filtering can further reduce coding artifacts.

### SUMMARY

According to a general aspect of the present principles, a method for encoding or decoding a video is presented, comprising: applying a first pass of Sample Adaptive Offset (SAO) filtering to a block of a picture of the video; and determining whether a second pass of SAO filtering is to be turned off for the block of the picture, wherein a first syntax flag is used to signal whether the second pass of SAO filtering is turned off for both luma and chroma components of the block.

According to another general aspect of the present principles, an apparatus for encoding or decoding a video is presented, comprising: means for applying a first pass of Sample Adaptive Offset (SAO) filtering to a block of a picture of the video; and means for determining whether a second pass of SAO filtering is to be turned off for the block of the picture, wherein a first syntax flag is used to signal whether the second pass of SAO filtering is turned off for both luma and chroma components of the block.

According to another general aspect of the present principles, a bitstream is formatted to include: an encoding of a block of a picture of the video; an encoding of one or more syntax elements used for a first pass of Sample Adaptive Offset (SAO) filtering for the block of the picture; and an encoding of a first syntax flag used to signal whether the second pass of SAO filtering is turned off for both luma and chroma components of the block.

For the second pass, a second syntax flag can be used to signal whether the second pass of SAO filtering is turned off for the luma component of the block, and a third syntax flag can be used to signal whether the second pass of SAO filtering is turned off for the chroma components of the block.

For the first pass of SAO filtering, the first syntax flag may not be available for use to signal whether the first pass of SAO filtering is turned off for both luma and chroma components of the block.

Signaling of syntax elements related to SAO filtering may be omitted in the second pass of SAO filtering when the second pass of SAO filtering is turned off for both luma and chroma components of the block. For example, syntax elements indicating merge mode and SAO offsets are not signaled in a bitstream.

When the first syntax flag indicates that the second pass of SAO filtering is not turned off for both luma and chroma components of the block and the second syntax flag is zero, the third syntax flag may be inferred to be non-zero, in particular, a value corresponding to the third syntax flag can be set to the third syntax flag plus 1, the value corresponding to the third syntax flag controlling a SAO type of the chroma components of the block.

The present embodiments also provide a computer readable storage medium having stored thereon instructions for encoding or decoding a video according to the methods described above. The present embodiments also provide a computer readable storage medium having stored thereon a bitstream generated according to the methods described above.

The present embodiments also provide an apparatus for transmitting the bitstream generated according to the methods described above.

### BRIEF DESCRIPTION OF THE DRAWINGS

FIG. 1 illustrates a block diagram of an exemplary HEVC video encoder.
FIG. 2 illustrates a block diagram of an exemplary HEVC video decoder.
FIG. 3 is a pictorial example illustrating four 1-D directional patterns for EO (Edge Offset) sample classification.
FIG. 4 a pictorial example illustrating that positive offsets are used for categories 1 and 2, and negative offsets are used for categories 3 and 4.
FIG. 5A is a pictorial example illustrating BO (Band Offset) with the associated starting band position and offsets of four consecutive bands, and FIG. 5B is a pictorial example illustrating BO with non-consecutive bands.
FIG. 6 illustrates an exemplary method for decoding a bitstream using SAO.
FIG. 7A shows a schematic illustration of the parsing and reconstruction processes, and FIG. 7B illustrates an exemplary method using SAO filtering, with parsing and reconstruction processes.
FIG. 8A is a pictorial example illustrating a portion of a picture that includes a coding tree block (CTB), and FIG. 8B illustrates an exemplary method for parsing the SAO syntax elements.
FIG. 9 illustrates an exemplary method for parsing the SAO syntax elements, after the merge mode test, for the current CTU.
FIG. 10 illustrates an exemplary method for reconstructing the SAO parameters, based on the SAO related syntax elements obtained from the parsing process.
FIG. 11 illustrates an exemplary encoder/decoder where an HEVC encoder/decoder is modified to use multi-pass SAO filtering, according to an embodiment of the present principles.
FIG. 12 illustrates exemplary changes in the parsing process for the first SAO pass, according to an embodiment of the present principles.
FIG. 13A illustrates exemplary changes in the parsing process for subsequent SAO passes, according to an embodiment of the present principles, and FIG. 13B illustrates exemplary changes in the parsing process for subsequent SAO passes, according to another embodiment of the present principles.
FIG. 14A depicts the percentage of slices that have SAO filtering turned on for the luma and chroma components, respectively in the first pass and in the second pass; FIG. 14B depicts the percentage of CTUs that have SAO filtering turned off for the luma and chroma components, respectively in the first pass and in the second pass; FIG. 14C depicts the percentage of CTUs that use the merge mode for SAO filtering in the first pass and in the second pass.
FIG. 15 illustrates exemplary changes in the parsing process for subsequent SAO passes, according to an embodiment of the present principles.
FIG. 16 illustrates a block diagram of an exemplary system in which various aspects of the exemplary embodiments of the present principles may be implemented.

### DETAILED DESCRIPTION

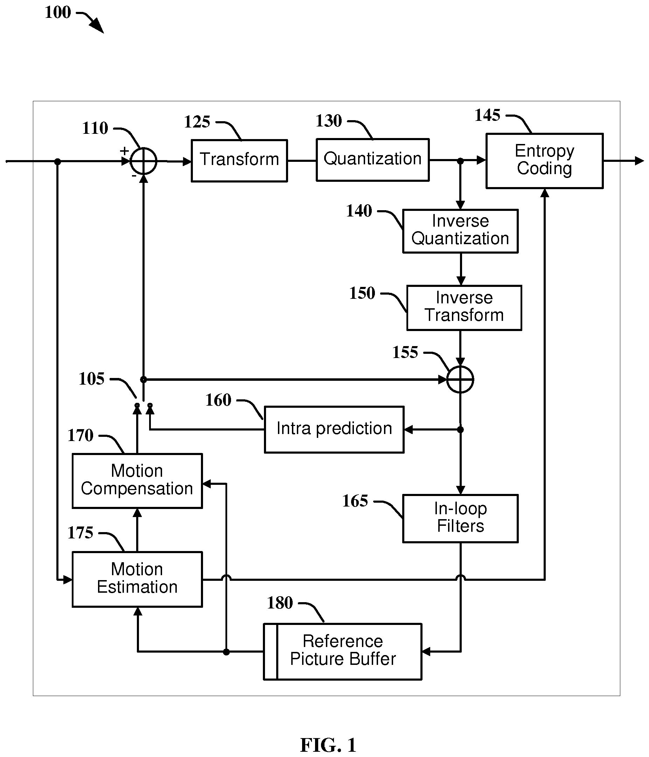

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably. Usually but not necessarily the term "reconstructed" is used at the encoder side while "decoded" is used at the decoder side. We may also use the terms "image," "picture," and "frame" interchangeably.

The HEVC specification distinguishes between "blocks" and "units," where a "block" addresses a specific area in a sample array (e.g., luma, Y), and the "unit" includes the collocated block of all encoded color components (Y, Cb, Cr, or monochrome), syntax elements and prediction data that are associated with the block (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock, a partition and a sub-block as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. The reference may extend over two times the block size in horizontal and vertical direction using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed.

The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD.

In HEVC, the precision of the motion information for motion compensation is one quarter-sample (also referred to as quarter-pel or 1/4-pel) for the luma component and one eighth-sample (also referred to as 1/8-pel) for the chroma components. A 7-tap or 8-tap interpolation filter is used for interpolation of fractional-sample positions, i.e., 1/4, 1/2 and 3/4 of full sample locations in both horizontal and vertical directions can be addressed for luma.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO filtering to reduce encoding artifacts. The filtered image is stored at a reference picture buffer (180).

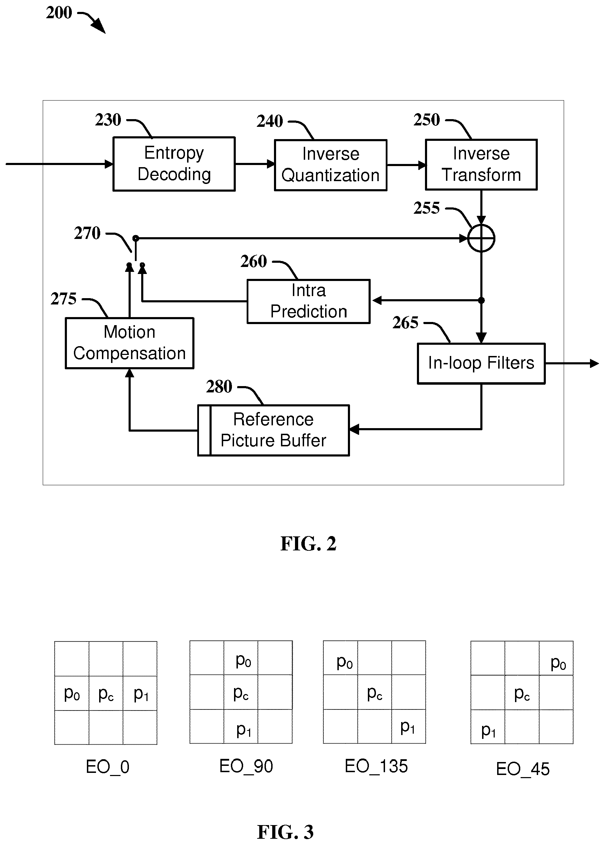

FIG. 2 illustrates a block diagram of an exemplary HEVC video decoder 200. In the exemplary decoder 200, a bitstream is decoded by the decoder elements as described below. Video decoder 200 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (230) to obtain transform coefficients, motion vectors, and other coded information. The transform coefficients are de-quantized (240) and inverse transformed (250) to decode the prediction residuals. Combining (255) the decoded prediction residuals and the predicted block, an image block is reconstructed. The predicted block may be obtained (270) from intra prediction (260) or motion-compensated prediction (i.e., inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

In HEVC, SAO is a sample-based filtering operation on a CTU basis. SAO is applied right after the deblocking filter if activated. SAO can be deactivated per CTU. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from the neighborhood. SAO can be applied to the luma and chroma components, where the SAO mode is the same for Cb and Cr components. The SAO parameters are configured individually for each color component.

### Edge Offset

EO uses four 1-D directional patterns: horizontal, vertical, 135° diagonal, and 45° diagonal, as shown in FIG. 3, for sample classification, where the label "p_{c}" represents a current sample and the labels "p₀" and "p₁" represent two neighboring samples. Four EO classes are specified based on the directions, and each EO class corresponds to one direction. The selected EO class is signaled in the bitstream as side information.

**TABLE 1**

| **Category** | **Condition** | **Meaning** |
|---|---|---|
| 1 | p_{c} < p₀ and p_{c} < p₁ | full valley |
| 2 | p_{c} < p₀ and p_{c} == p₁ or p_{c} == p₀ and p_{c} < p₁ | half valley |
| 3 | p_{c} > p₀ and p_{c} == p₁ or p_{c} == p₀ and p_{c} > p₁ | half peak |
| 4 | p_{c} > p₀ and p_{c} > p₁ | full peak |
| 0 | None of the above | plain |

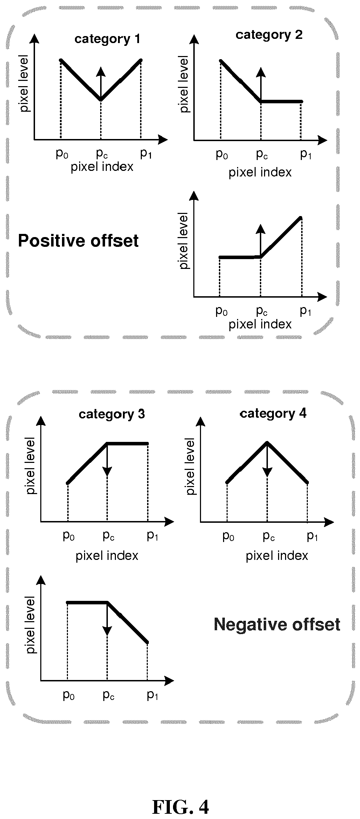

For a given EO class, each sample inside the CTB is classified into one of five (NC = 5) categories based on local gradients. Specifically, the current sample value, labeled as "p_{c}," is compared with its two neighbors along the selected 1-D direction. The categorization rules for a sample are summarized in TABLE 1. As also shown in FIG. 4, categories 1 and 4 are associated with a local valley and a local peak along the selected 1-D pattern, respectively, categories 2 and 3 are associated with concave and convex corners along the selected 1-D pattern, respectively. Positive offsets are used for categories 1 and 2, and negative offsets are used for categories 3 and 4.

If the current sample value does not belong to categories 1- 4 (i.e., the current sample value is the same as its two neighbors, or if p₀ < p_{c} < p₁ or p₀ > p_{c} > p₁), then it is in category 0 and SAO is not applied (i.e., offset is 0). For categories 1- 4, offsets are encoded. For ease of notations, a category with an offset encoded may be referred to as a "signaled category."

### Band Offset

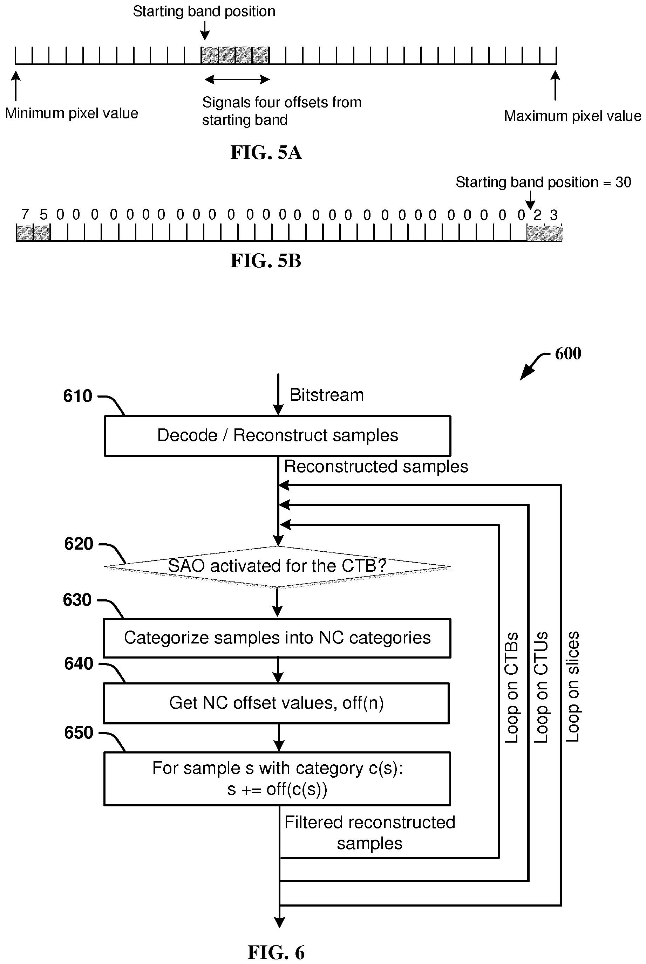

For BO, the range of sample values (for example, 0 - 255 in 8-bit) is uniformly split into 32 bands and the sample values belonging to (NC - 1) = 4 consecutive bands are modified by adding an offset, off(n), n = 1, ..., 4, as shown in FIG.5A. Only offsets of four consecutive bands and the starting band position are signaled to the decoder. The starting band position indicates the position of the first band with an encoded offset. One offset is coded for each of the (NC -1) bands and the remaining bands have an offset equal to zero. When the starting band position is close to the last band position, the offset values may correspond to non-consecutive bands as depicted in an example of FIG. 5B since the bands are managed as a circular buffer. Note for BO, those four signaled bands can be considered as four categories, and the remaining bands can be considered as another category. In the present application, we use the terms "band" and "category" interchangeably.

FIG. 6 illustrates an exemplary method 600 for decoding a bitstream using SAO. After the bitstream is decoded (610), the reconstructed samples are further filtered using SAO. It should be noted that the term "decoded" or "reconstructed" may mean that a bitstream is partially "decoded" or "reconstructed," for example, the signals obtained after deblocking filtering but before SAO filtering, and the reconstructed samples may be different from the final decoded output that is used for display.

If SAO is activated for a slice, the decoder checks (620) whether SAO is activated for the current CTB. If SAO is activated, the decoder categorizes (630) samples in the CTB into NC = 5 categories. The offset values for each category, off(n), can be obtained (640). At step 650, for sample s with category c(s), the sample can be adjusted to s = s + off(c(s)). As discussed above, sample offsets may be 0 and the corresponding samples are not adjusted. The filtered reconstructed samples are used as the final output of the decoder.

The encoder may perform a similar process as method 600. At the encoder side, step 610 is implemented to obtain the reconstructed samples, for example, the SAO filtering process uses the reconstructed samples from the deblocking filter as input. The offset values are encoded in the bitstream. The filtered reconstructed samples can be used as references for other pictures.

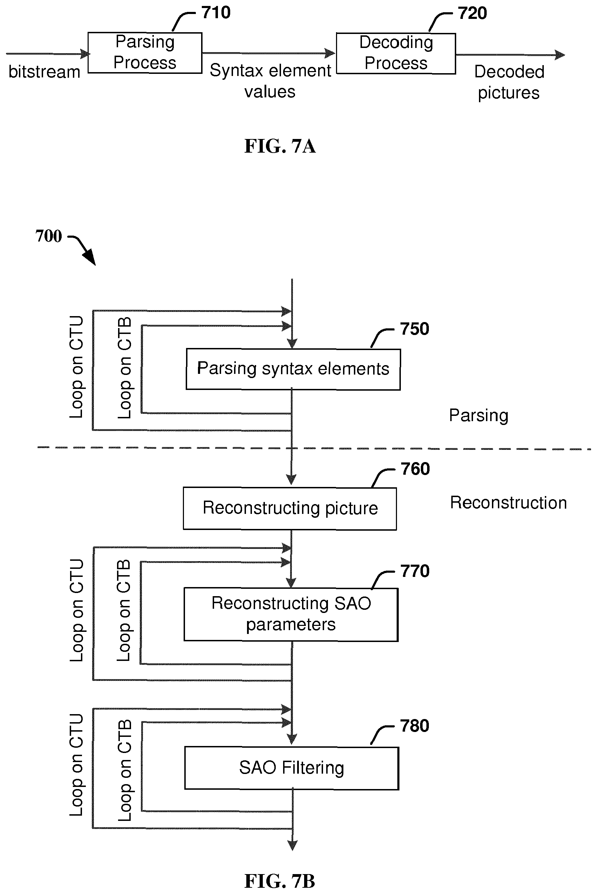

FIG. 7A shows a schematic illustration of the parsing process and the decoding process. A syntax is an element of data represented in a bitstream. The semantics specify the meaning of the values of a syntax element. The semantics may further constrain the values a syntax element may choose from, and define variables, based on syntax elements, to be used in the decoding process.

The process of extracting the syntax elements from the bitstream is called the parsing process. The parsing may just be limited to the decoding of syntax elements values, where bits from the bitstream are used as inputs, and syntax element values are provided as outputs. For each element, a descriptor is used in the syntax table to specify the applicable parsing process.

For example, in HEVC, the following descriptors specify the parsing process of each syntax element:
- ae(v): context-adaptive arithmetic entropy-coded syntax element.
- b(8): byte having any pattern of bit string (8 bits).
- f(n): fixed-pattern bit string using n bits written (from left to right) with the left bit first.
- i(n): signed integer using n bits. When n is "v" in the syntax table, the number of bits varies in a manner dependent on the value of other syntax elements.
- se(v): signed integer 0-th order Exp-Golomb-coded syntax element with the left bit first.
- st(v): null-terminated string encoded as universal coded character set (UCS) transmission format-8 (UTF-8) characters as specified in ISO/IEC 10646.
- u(n): unsigned integer using n bits. When n is "v" in the syntax table, the number of bits varies in a manner dependent on the value of other syntax elements.
- ue(v): unsigned integer 0-th order Exp-Golomb-coded syntax element with the left bit first.

The decoding process specifies how the syntax elements are used to reconstruct the samples. The decoding process takes the syntax element values as input, and reconstructs the video sequence based on the semantics of the syntax elements.

When designing a video codec, one rule is to achieve independent parsing, where the parsing process (710) is independent of the decoding process (720). Generally, the partitioning between parsing and decoding processes is governed by the rule of limiting resources for parsing in order to dedicate lightweight hardware or software resources to the parsing process. It should be noted that the "decoding process 720" shown in FIG. 7A may also be referred to as a "reconstruction process," and the phrase "decoding process" may generally be applied to the combination of the "parsing process 710" and the "decoding process 720" as shown in FIG. 7A. Whether the phrase "decoding process" as used is intended to refer specifically to a subset of operations, such as those indicated by "decoding process 720," or generally to the decoding process will be clear based on the context of the specific descriptions and is believed to be well understood by those skilled in the art.

FIG. 7B illustrates an exemplary method 700 using SAO filtering, with parsing and reconstruction processes. Process 700 is mainly used to illustrate the separate parsing and reconstruction processes for SAO filtering, and may have skipped some operations related to other modules in a decoder.

At the beginning, syntax elements for SAO are parsed (750) for individual CTUs and CTBs, for example, sao_merge_left_flag, sao_merge_up_flag, sao_type_idx_luma, sao_type_idx_chroma, sao_eo_class_luma, sao_eo_class_chroma, sao_band_position, sao_offset_abs, and sao_offset_sign. The picture is reconstructed (760), for example, using entropy decoding, prediction, inverse quantization, inverse transforms, and motion compensation and deblocking filter. The SAO parameters are reconstructed (770) for individual CTBs, for example, the offsets for different SAO classes are derived. Then SAO filtering is performed (780) for individual CTBs. Here, we separate the parsing process (750) from the reconstruction process (760, 770, 780), and we can see that the parsing process is independent of the subsequent reconstruction process.

Process 700 corresponds to the design implemented in the HEVC reference software. In a different implementation, one could group parsing and reconstructing SAO parameters together in the same loop. However, in practical implementation, one may try to simplify the parsing stage as much as possible to reduce the required resources (e.g., memory and processing) so that the parsing can be performed by software while the reconstructing can be performed by hardware for example.

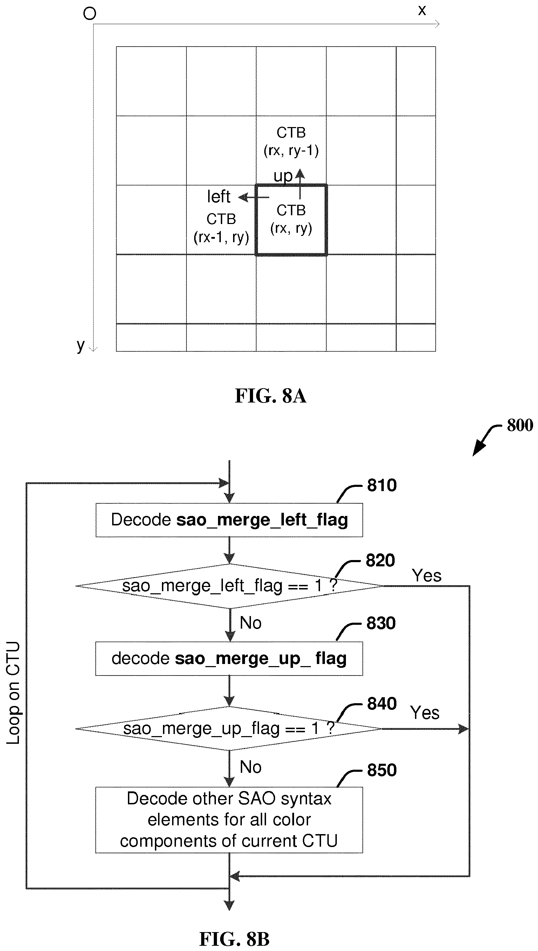

FIG. 8A illustrates a portion of a picture that includes a CTB at position (rx, ry), and a neighboring left CTB at position (rx - 1, ry) and a neighboring above CTB at position (rx, ry - 1). According to the HEVC standard, the SAO parameters are either encoded explicitly in the bitstream or derived from previously encoded neighboring left or above CTUs (merge modes).

FIG. 8B illustrates an exemplary method 800 for parsing the SAO related syntax elements. For a current CTU, syntax element sao_merge_left_flag can be decoded (810) from the bitstream. If sao_merge_left_flag equals 1 (820), the parsing process moves on to the next CTU. If sao_merge_left_flag equals 0, syntax element sao_merge_up_flag can be decoded (830) from the bitstream. If sao_merge_up_flag equals 1 (840), the parsing process moves on to the next CTU. If neither of syntax elements sao_merge_left_flag and sao_merge_up_flag is equal to 1, the remaining SAO related syntax elements for the current CTU are decoded (850) from the bitstream.

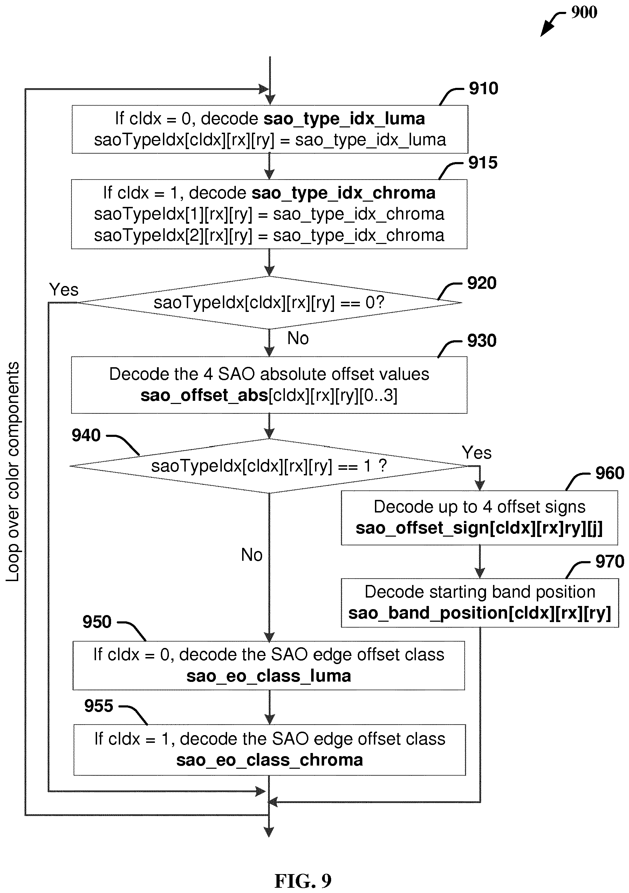

FIG. 9 illustrates an exemplary method 900 for parsing the remaining SAO syntax elements for the current CTU at position (rx, ry). Method 900 can be used to perform step 850 in method 800.

A CTB can select one SAO type among OFF (not applied), BO and EO. When the current color component is the luma component (cIdx=0), syntax element, sao_type_idx_luma, which specifies the SAO type for the luma component, can be decoded (910) from the bitstream and variable saoTypeIdx[cIdx][rx][ry] is set equal to sao_type_idx_luma. When the current color component is the first chroma component (cIdx=1), syntax element, sao_type_idx_chroma, which specifies the SAO type for both chroma components, can be decoded (915) from the bitstream and variable saoTypeIdx[cIdx][rx][ry] is set equal to sao_type_idx_chroma.

If saoTypeIdx[cIdx][rx][ry] equals 0 (920), SAO is not applied for the current component, and the parsing process moves on to the next color component. If saoTypeIdx[cIdx][rx][ry] is not equal to 0, the decoder can decode (930) four SAO absolute offset values, sao_offset_abs[cIdx][rx][ry][j], j = 0..3, from the bitstream.

If saoTypeIdx[cIdx][rx][ry] equals 1 (940), BO is applied, and the decoder decodes (960, 970) up to four offset signs (sao_offset_sign[cIdx][rx]ry][j]) for non-zero offset values and the starting band position (sao_band_position[cIdx][rx][ry]). If saoTypeIdx[cIdx][rx][ry] is not equal to 1 (940), EO is applied. The SAO EO class (sao_eo_class_luma or sao_eo_class_chroma) is decoded (950, 955) for the luma component or chroma component. Both chroma components will use the same EO class as indicated by sao_eo_class_chroma. For EO, during the SAO parameter reconstruction process, based on the relationship between the current sample and two neighboring samples chosen based on the EO class, the category can be decided as shown in TABLE 1 and the sign for an offset can be inferred from the category as described before.

Note here in the parsing process as described in FIG. 8 and FIG. 9, syntax element values are decoded from the bitstream, and variable saoTypeIdx is set to a value for the parsing process. However, the actual SAO parameters (e.g., SAO offsets) are not reconstructed.

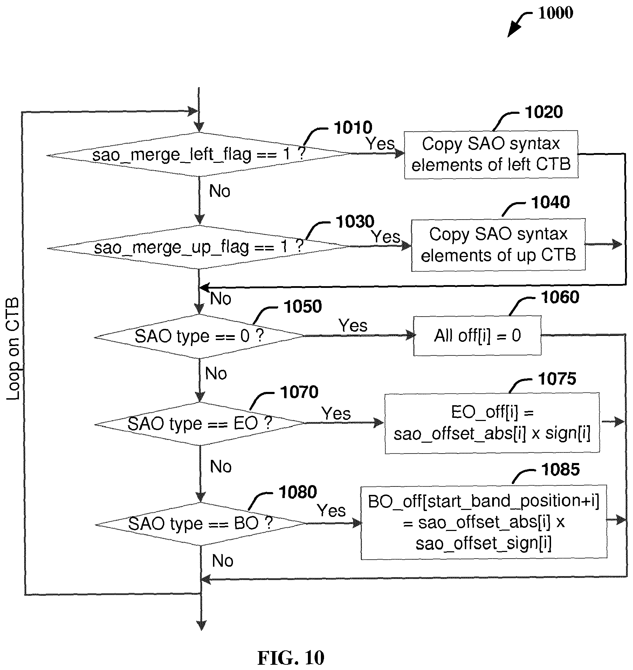

FIG. 10 illustrates an exemplary method 1000 for reconstructing the SAO parameters, based on the SAO related syntax elements obtained from the parsing process, for example, as shown in FIG. 8 and FIG. 9. For a current CTB, if sao_merge_left_flag equals 1 (1010), the SAO syntax elements of the neighboring left CTB are copied (1020) for the current CTB, and the process moves on to reconstruction. If sao_merge_left_flag equals 0, and if sao_merge_up_flag equals 1 (1030), the SAO syntax elements of the neighboring above CTB are copied (1040) for the current CTB, and the process moves on to reconstruction.

If neither of syntax elements sao_merge_left_flag and sao_merge_up_flag is equal to 1, the SAO parameters for the current CTB are reconstructed using syntax elements parsed for the current CTB from the bitstream.

For saoTypeIdx[cIdx][rx][ry] equals 0, 1 or 2, "SAO type" is set to 0 (not applied), "BO" and "EO," respectively. If the SAO type is 0 (1050), all offsets are set to 0 (1060), namely, no SAO filtering is applied. If the SAO type is EO (1070), the EO offset is set to (1075) EO_off[i] = sao_offset_abs[i] * sign[i], i = 0, ..., where the values of sign[i] are derived from the EO category (see TABLE 1). If the SAO type is BO (1080), the BO offset is set to BO_off[i+sao_band_position] = sao_offset_abs[i] * sao_offset_sign[i] (1085). Based on the reconstructed sample offset values, the SAO filtering can be applied.

The present principles are directed to multi-pass SAO filtering in video encoding and decoding. In various embodiments, information for SAO in a current pass can be inferred depending on the information of SAO in one or more previous passes, and thus signaling of some information may be omitted in the current pass to save bits.

In a multi-pass SAO filtering approach, the output filtered samples of the previous SAO pass becomes input to the current SAO pass. The same SAO filtering techniques may be used in different passes, or different filtering techniques may be used in different passes. Using multi-pass SAO filtering may achieve bitrate savings.

Using a two-pass SAO filter as an example, the SAO filter may be implemented using the following non-limiting examples:
- the first pass may use SAO according to HEVC, and the second pass may use PSAO (Peak SAO). In Peak SAO, a pixel is first classified into one of three categories, and the pixel is then applied with an offset based on both category and pixel difference with its neighbors.
- both the first pass and the second pass use BO or EO.
- the first pass uses BO, and the second pass uses EO.
- the first pass chooses from OFF, BO and EO, and the second pass exclude the SAO types that is chosen for the first pass.

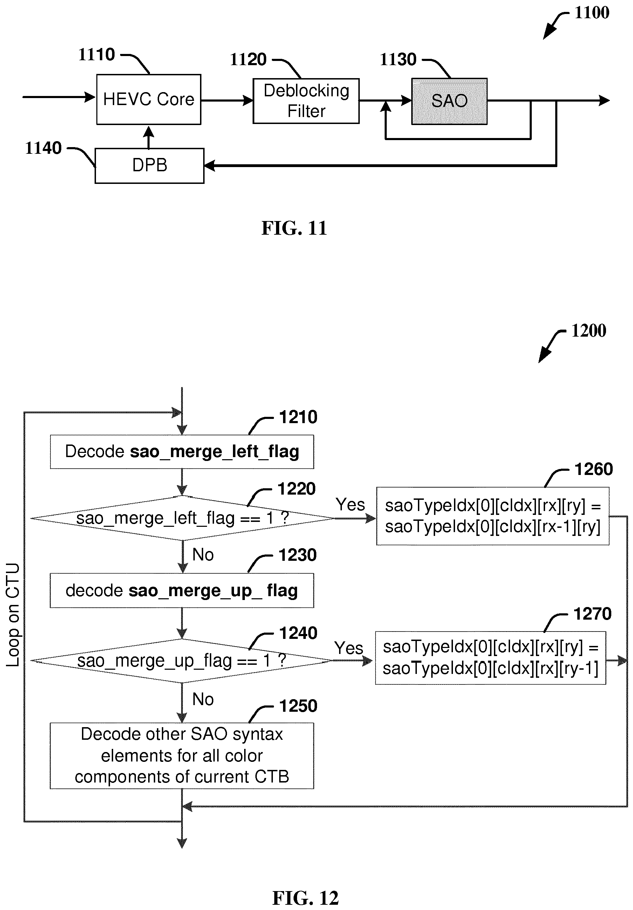

FIG. 11 illustrates an exemplary decoder 1100 where an HEVC decoder is modified to use multi-pass SAO filtering, according to an embodiment of the present principles. Decoder 1100 may use a bitstream as input, and output decoded pictures. HEVC core module (1110) corresponds to entropy decoding module (230), inverse quantization module (240), inverse transform modules (250), motion compensation module (275), switch (270) and intra prediction module (260) in decoder 200 as shown in FIG. 2. DPB (1140) may correspond to reference picture buffer (280) in decoder 200. Deblocking filter (1120) and SAO filter (1130) correspond to in-loop filters (265) in decoder 200, while SAO filter (1130) is modified to be performed in multiple passes. Similarly, at the encoder side, in-loop filters (165) can be modified to perform the SAO filter in multiple passes.

In the present application, we may refer to the output from HEVC core module (1110) as initial reconstructed pictures, the output from deblocking filter (1120) as reconstructed pictures, and the output from SAO filter (1130) as final reconstructed pictures. More generally, we may refer to these pictures generated from the input bitstream, which become available at different processing stages, all as reconstructed pictures.

Based on the syntax structure of HEVC, TABLE 2 illustrates an exemplary embodiment of multi-pass SAO filtering, where the differences from the HEVC syntax structure are shown in italics. For ease of reference, a column is also added to indicate the line number. Variable saoPass is used to indicate which pass the filtering is in. For the first pass, saoPass = 0. Variable saoTypeIdx has one more dimension saoPass.

**TABLE 2**

| 1 | sao(rx, ry, *saoPass*){ | **Descriptor** |
|---|---|---|
| 2 | *if((saoPass==0)* ∥ *(saoPass* > *0 && (saoTypeIdx[saoPass-1][0][rx][ry]) !*= *0* ∥ *(saoTypeIdx[saoPass-1][1][rx][ry] !*=*0))){* | |
| 3 | if(rx > 0){ | |
| 4 | leftCtbInSliceSeg = CtbAddrInRs > SliceAddrRs | |
| 5 | leftCtbInTile = TileId[CtbAddrInTs] == TileId[CtbAddrRsToTs[CtbAddrInRs-1]] | |
| 6 | if(leftCtbInSliceSeg && leftCtbInTile) | |
| 7 | **sao_merge_left_flag** | ae(v) |
| 8 | *if(sao_merge_left_flag){* | |
| 9 | *saoTypeIdx[saoPass][0][rx][ry]* = *saoTypeIdx[saoPass][0][rx-1][ry]* | |
| 10 | *saoTypeIdx[saoPass][1][rx][ry]* = *saoTypeIdx[saoPass] [1][rx-1][ry]* | |
| 11 | *}* | |
| 12 | } | |
| 13 | if(ry > 0 && !sao_merge_left_flag){ | |
| 14 | upCtbInSliceSeg = (CtbAddrInRs - PicWidthInCtbsY) >= SliceAddrRs | |
| 15 | upCtbInTile = TileId[CtbAddrInTs] == TileId[CtbAddrRsToTs[CtbAddrInRs - PicWidthInCtbsY]] | |
| 16 | if(upCtbInSliceSeg && upCtbInTile) | |
| 17 | **sao_merge_up_flag** | ae(v) |
| 18 | *if(sao_merge_up_flag){* | |
| 19 | *saoTypeIdx[saoPass][0][rx][ry]* = *saoTypeIdx[saoPass][0][rx][ry-1]* | |
| 20 | *saoTypeIdx[saoPass][1][rx][ry]* = *saoTypeIdx[saoPass][1][rx][ry-1]* | |
| 21 | *}* | |
| 22 | } | |
| 23 | *}* | |
| 24 | if(!sao_merge_up_flag && !sao_merge_left_flag) | |
| 25 | for(cIdx = 0; cIdx < 3; cIdx++) | |
| 26 | { | |
| 27 | *if((saoPass*==*0)* ∥ *(saoPass* > *0 && saoTypeIdx[saoPass-1][(cIdx*==*0)?0:1][rx][ry]) !*= 0*){* | |
| 28 | if((slice_sao_luma_flag && cIdx == 0) ∥ (slice_sao_chroma_flag && cIdx > 0)){ | |
| 29 | if(cIdx == 0) | |
| 30 | **sao_type_idx_luma** | ae(v) |
| 31 | else if(cIdx == 1) | |
| 32 | **sao_type_idx_chroma** | ae(v) |
| 33 | if(SaoTypeIdx*[saoPass]*[cIdx][rx][ry] != 0){ | |
| 34 | for(i = 0; i < 4; i++) | |
| 35 | **sao_offset_abs**[cIdx][rx][ry][i] | ae(v) |
| 36 | if(SaoTypeIdx*[saoPass]*[cIdx][rx][ry] == 1){ | |
| 37 | for(i = 0; i < 4; i++) | |
| 38 | if(sao_offset_abs[cIdx][rx][ry][i] != 0) | |
| 39 | **sao_offset_sign[**cIdx][rx][ry][i] | ae(v) |
| 40 | **sao_band_position**[cIdx][rx][ry] | ae(v) |
| 41 | } else { | |
| 42 | if(cIdx == 0) | |
| 43 | **sao**_**eo**_**class**_**luma** | ae(v) |
| 44 | if(cIdx == 1) | |
| 45 | **sao**_**eo**_**class**_**chroma** | ae(v) |
| 46 | } | |
| 47 | } | |
| 48 | *else {* | |
| 49 | *saoTypeIdx [saoPass][cIdx][rx][ry]* = *0* | |
| 50 | *}* | |
| 51 | } | |
| 52 | *}* | |
| 53 | } | |
| 54 | } | |

For the first pass (saoPass = 0), FIG. 12 illustrates the changes in the parsing process corresponding to the changes in TABLE 2. When sao_merge_left_flag equals 1, saoTypeIdx is set (1260) to the value of saoTypeIdx of the neighboring left CTB, namely, saoTypeIdx[0][cIdx][rx][ry] = saoTypeIdx[0][ddx][rx-1][ry], cIdx = 0, 1 (also see TABLE 2, lines 8-11). When sao_merge_up_flag equals 1, saoTypeIdx is set (1270) to the value of saoTypeIdx of the neighboring above CTB, namely, saoTypeIdx[0][cIdx][rx][ry] = saoTypeIdx[0][cIdx][rx][ry-1], cIdx = 0, 1 (also see TABLE 2, lines 18-21). Other steps in FIG. 12 are the same as those shown in FIG. 8B. In particular, steps 1210, 1220, 1230, 1240 and 1250 correspond to 810, 820, 830, 840 and 850, respectively.

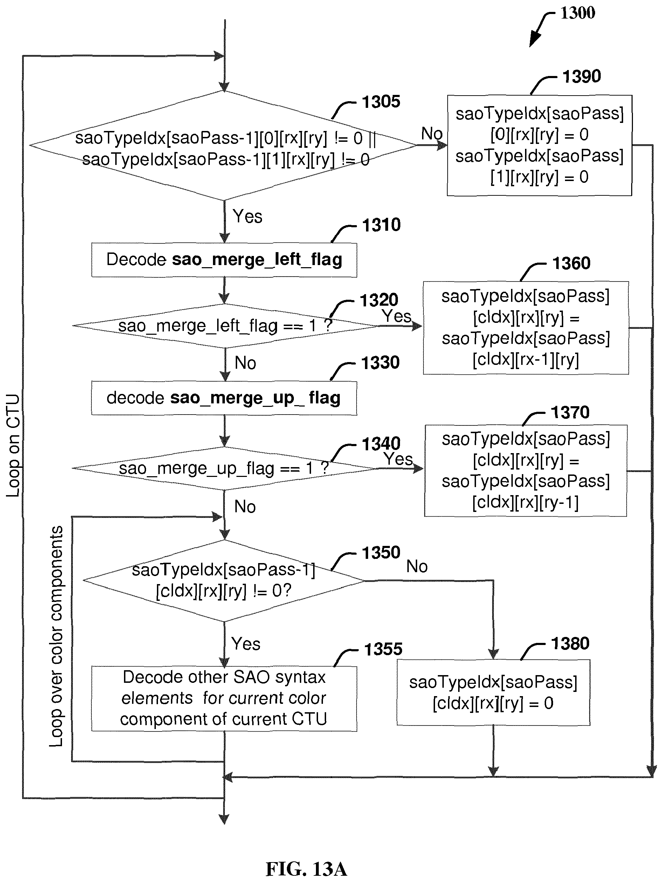

For a subsequent pass (saoPass > 0), the SAO type of a previous SAO pass is used to decide whether some or all SAO operations for the current pass can be omitted or turned off. FIG. 13A illustrates the changes in the parsing process corresponding to the changes in TABLE 2 for saoPass > 0. If both the SAO types for luma and chroma components in the previous pass (saoPass - 1) are "not applied," namely, when the condition at line 2 of TABLE 2 or the condition at 1305 of FIG. 13A ((saoTypeIdx[saoPass-1][0][rx][ry]) != 0 ∥ (saoTypeIdx[saoPass-1][1][rx][ry] !=0))) is not satisfied, the SAO for all color components for the current pass is turned off, and process 1300 sets (1390) saoTypeIdx to 0 and moves on to the next CTU.

In addition, as shown in TABLE 2 or FIG. 13A, when the previous SAO pass turns off SAO filtering for all color components, parsing of all SAO syntax elements are omitted. That is, encoding of related syntax elements (e.g., syntax elements shown in FIG. 8 and FIG. 9) can be omitted and therefore the bits used for the current SAO pass may be reduced.

When the condition at step 1305 is satisfied, namely, when one or more of the color components perform SAO filtering in the previous pass, steps 1310-1340, 1360 and 1370 are performed. Syntax elements sao_merge_left_flag or sao_merge_up_flag may be decoded from the bitstream. Steps 1310, 1320, 1330 and 1340 correspond to steps 1210, 1220, 1230 and 1240, respectively. When sao_merge_left_flag equals 1, saoTypeIdx is set (1360) to the value of saoTypeIdx of the neighboring left CTU, namely, saoTypeIdx[saoPass][cIdx][rx][ry] = saoTypeIdx[saoPass][cIdx][rx-1][ry], cIdx = 0, 1 (also see TABLE 2, lines 8-11). When sao_merge_up_flag equals 1, saoTypeIdx is set (1370) to the value of saoTypeIdx of the neighboring above CTU, namely, saoTypeIdx[saoPass][cIdx][rx][ry] = saoTypeIdx[saoPass][cIdx][rx][ry-1], cIdx = 0, 1 (also see TABLE 2, lines 18-21).

At step 1350, if the SAO filtering is performed in a previous pass for a particular color component cIdx, then the remaining SAO syntax elements are parsed (1355). Step 1355 corresponds to step 1250 for current color component. Otherwise, if the previous pass turns off the SAO, then saoTypeIdx[saoPass][cIdx][rx][ry] is set to 0 and effectively turns off the SAO filtering for this particular color component in the current pass. More specifically, the syntax elements (e.g., the syntax elements as shown in FIG. 9) for this particular color component cIdx do not need to be included in the bitstream and therefore bits can be saved. Thus, even though sao_type_idx_luma or sao_type_idx_chroma is not explicitly signaled in the bitstream, the current SAO pass can be turned off when the previous pass turns off the SAO for the current color component.

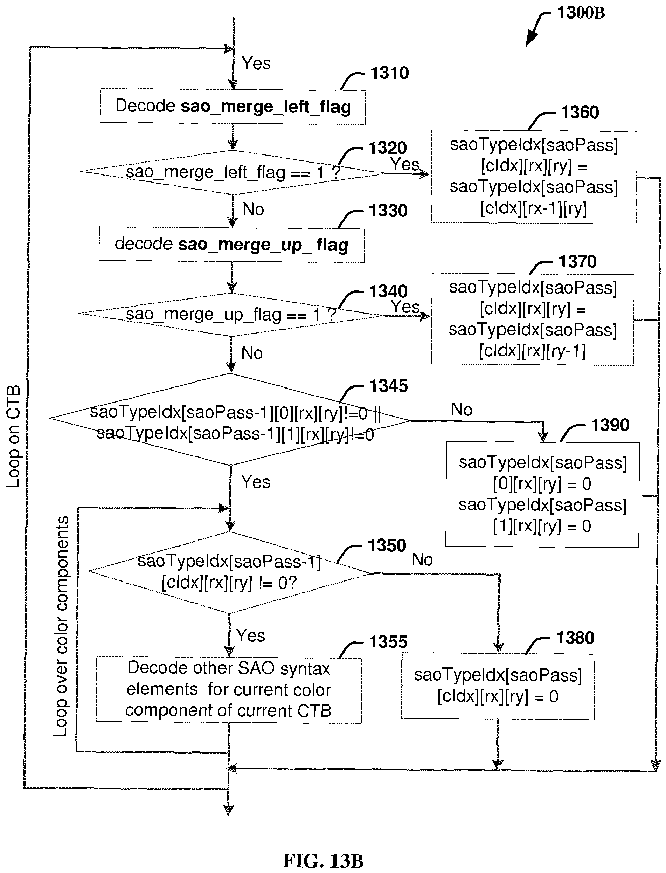

In another embodiment as shown in FIG. 13B, the condition test at 1305 (i.e., line 2 in TABLE 2) may be moved to allow the merge mode test. In particular, the condition test (1345) may be placed after the merge modes are tested. Consequently, when the SAO filtering for all color components are turned off, the parsing process still decodes the merge flags (1310, 1330), but not other SAO syntax elements. Thus, no SAO syntax elements, except the merge flags, are encoded in the bitstream under this condition and therefore bit savings may still be achieved.

In another embodiment, we may keep the first pass the same as shown in FIG. 8B, namely, without performing steps 1260 and 1270. When steps 1260 and 1270 are not performed, saoTypeIdx[0][cIdx][rx][ry] is not defined when the merge flag (sao_merge_left_flag or sao_merge_up_flag) is set to 1. Similarly, we may also skip performing steps 1360 and 1370 in the subsequent passes, namely, saoTypeIdx[saoPass][cIdx][rx][ry] is not defined when the merge flag (sao_merge_left_flag or sao_merge_up_flag) is set to 1. Not performing these steps may further simplify the parsing processes as shown in FIG. 12 and FIG. 13A. When variable saoTypeIdx[saoPass][cIdx][rx][ry] is not defined, we consider that condition "saoTypeIdx[saoPass][cIdx][rx][ry] != 0" is not met. Thus for this embodiment, even if the SAO filtering is off for a CTB in the SAO merge mode, the subsequent pass may still perform the SAO filtering. TABLE 3 illustrates the changes for this embodiment with respect to the HEVC syntax structure, wherein the changes are shown in italics.

**TABLE 3**

| sao(rx, ry, *saoPass*){ | **Descriptor** |
|---|---|
| *if((saoPass* == *0)* ∥ *(saoPass* > *0 && ((SaoTypeIdx[saoPass-1][0][rx][ry] !*= *0)* ∥ *(SaoTypeIdx[saoPass-1][1][rx][ry] !*= *0)))){* | |
| if(rx > 0){ | |
| leftCtbInSliceSeg = CtbAddrInRs > SliceAddrRs | |
| leftCtbInTile = TileId[CtbAddrInTs] == TileId[CtbAddrRsToTs[CtbAddrInRs - 1]] | |
| if(leftCtbInSliceSeg && leftCtbInTile) | |
| **sao_merge_left_flag** | ae(v) |
| } | |
| if(ry > 0 && !sao_merge_left_flag){ | |
| upCtbInSliceSeg = (CtbAddrInRs - PicWidthInCtbsY) >= SliceAddrRs | |
| upCtbInTile = TileId[CtbAddrInTs] == TileId[CtbAddrRsToTs[ CtbAddrInRs - PicWidthInCtbsY]] | |
| if(upCtbInSliceSeg && upCtbInTile) | |
| **sao_merge_up_flag** | ae(v) |
| } | |
| *}* | |
| if(!sao_merge_up_flag && !sao_merge_left_flag) | |
| for(cIdx = 0; cIdx < 3; cIdx++) | |
| { | |
| *if((saoPass*==*0)* ∥ *(saoPass* > *0 && (SaoTypeIdx[saoPass-1][cIdx][rx][ry] !*= *0))) {* | |
| if((slice_sao_luma_flag && cIdx == 0) ∥ (slice_sao_chroma_flag && cIdx > 0)){ | |
| if(cIdx == 0) | |
| **sao_type_idx_luma** | ae(v) |
| else if(cIdx == 1) | |
| **sao_type_idx_chroma** | ae(v) |
| if(SaoTypeIdx*[saoPass]*[cIdx][rx][ry] != 0){ | |
| for(i = 0; i < 4; i++) | |
| **sao_offset_abs**[cIdx][rx][ry][i] | ae(v) |
| if(SaoTypeIdx*[saoPass]*[cIdx][rx][ry] == 1){ | |
| for(i = 0; i < 4; i++) | |
| if(sao_offset_abs[cIdx][rx][ry][i] != 0) | |
| **sao_offset_sign**[cIdx][rx][ry][i] | ae(v) |
| **sao_band_position**[cIdx][rx][ry] | ae(v) |
| } else { | |
| if(cIdx == 0) | |
| **sao**_**eo**_**class**_**luma** | ae(v) |
| if(cIdx == 1) | |
| **sao**_**eo**_**class**_**chroma** | ae(v) |
| } | |
| } | |
| } | |
| *}* | |
| *else {* | |
| *SaoTypeIdx[saoPass][cIdx][rx][ry]* = 0 | |
| *}* | |
| } | |
| } | |

Similar to the process of FIG. 13A, we may also remove the condition test at line 2 of TABLE 3 (if((saoPass == 0) ∥ ((SaoTypeIdx[saoPass-1][0][rx][ry] != 0) ∥ (SaoTypeIdx[saoPass-1][1][rx][ry] != 0)))) to allow the merge mode test.

In the above, we mainly describe our proposed methods from the decoding side. The encoding side may be modified symmetrically to the decoding side. For example, in an encoding method corresponding to FIG. 12, steps 1210 and 1230 can be adjusted to encode the merge flags, and in encoding method corresponding to FIG. 13A and FIG. 13B, steps 1310 and 1330 can be adjusted to encode the merge flags, and step 1355 can be adjusted to encode other SAO syntax elements.

Using the above multi-pass implementations, when a previous SAO pass is turned off, an encoder may omit sending SAO related syntax elements. At the decoder side, based on whether a previous SAO pass turns off the SAO filtering, the decoder may know that some or all SAO related syntax elements are not present in the bitstream, thus simplifying the parsing process. It should be noted that the above implementations work in the parsing process, the decoding process (e.g., as shown in FIG. 10) is unchanged for the first pass, except that steps 1020 and 1040 (which include copying of *saoTypeIdx*) may be adjusted by not performing the copying of saoTypeIdx since it may have been performed at the parsing stage, for example, at step 1260, 1270, 1360, or 1370.

When using multiple SAO filtering passes, we notice that the statistics of the SAO parameters, for example, but not limited to, SAO types and EO classes, may differ significantly from one pass to another. Then the SAO syntax originally optimized for one single pass, may not be optimal for subsequent passes.

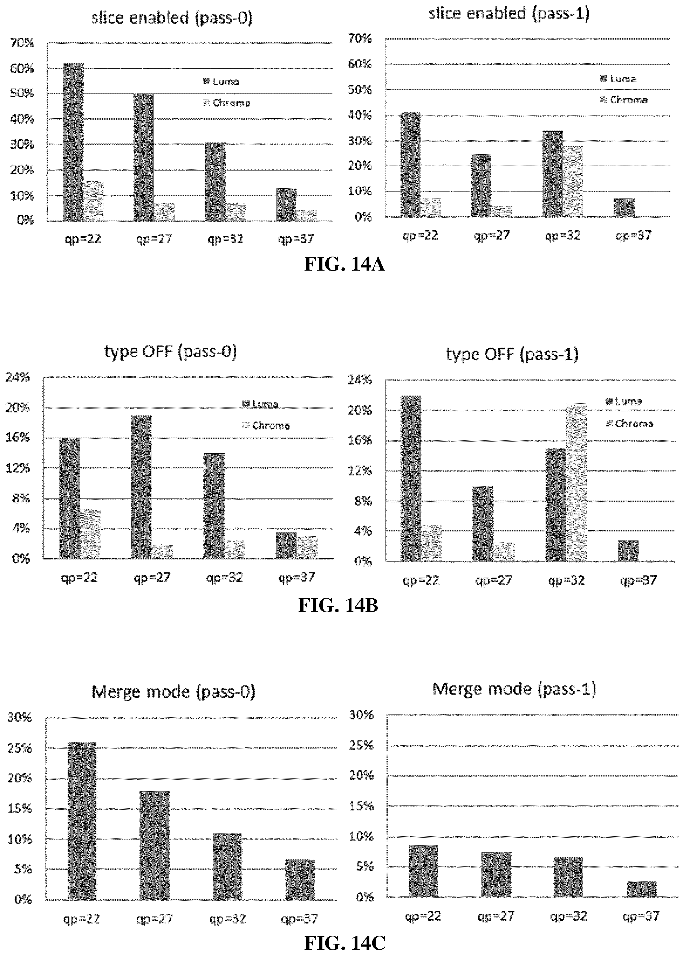

For example, we depict in FIGs. 14A, 14B and 14C the statistics, obtained with JEM3.0 (Joint Exploration Model 3.0), class-D content, of the SAO syntax elements **slice_sao_luma_flag** and **slice_sao_chroma_flag, sao_type_idx_luma** and **sao_type_idx_chroma,** and Merge mode (**sao_merge_left_flag, sao_merge_up_flag**) respectively. The first pass is denoted as "pass-0," and the second pass as "pass-1."

In the left, FIG. 14A depicts the percentage of slices that have SAO filtering turned on for the luma and chroma components, respectively (i.e., the percentage of **slice**_**sao**_**luma**_**flag** = 1 and **slice_sao_chroma_flag** = 1, respectively) in the first pass, for different quantization parameters (QPs). In the right, FIG. 14A depicts the percentage of the slices that have SAO filtering turned on for the luma and chroma components, respectively in the second pass.

In the left, FIG. 14B depicts the percentage of CTUs that have SAO filtering turned off for the luma and chroma components, respectively (i.e., the percentage of **sao_type_idx_luma** = 0 and **sao_type_idx_chroma** = 0, respectively) in the first pass, for different QPs. In the right, FIG. 14B depicts the percentage of the CTUs that have SAO filtering turned off for the luma and chroma components, respectively in the second pass.

In the left, FIG. 14C depicts the percentage of CTUs that use the merge mode for SAO filtering (i.e., the percentage of CTUs with **sao_merge_left_flag** = 1 or **sao_merge_left_flag** = 1) in the first pass, for different QPs. In the right, FIG. 14C depicts the percentage of the CTUs that use the merge mode in the second pass.

From these statistics, we can observe the followings:
- SAO is more frequently disabled for the whole slice at the second pass, in particular for the chroma components;
- The type "OFF" is more frequently selected in the second pass than in the first pass, for example, as shown in FIG. 14B for luma (QP = 22, 32) and chroma (QP = 27, 32).
- The merge mode is much less frequently selected for the second pass.

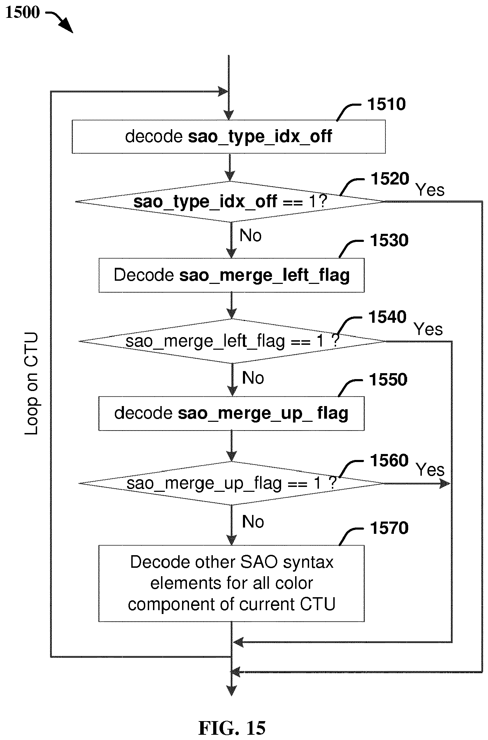

Based on the above observations, we propose to modify the syntax structure for the SAO in subsequent passes (saoPass > 0). In one embodiment, we propose to add an additional syntax flag **sao_type_idx_off** to indicate whether all components have SAO filtering OFF for a CTU, as shown in TABLE 4 and FIG. 15. In particular, **sao_type_idx_off** equal to 1 specifies that SAO filtering is not applied and no more SAO syntax elements are present in the bitstream. **sao_type_idx_off** equal to 0 indicates that at least one syntax element **sao_type_idx_luma** or **sao_type_idx_chroma** is not equal to 0.

The syntax changes with respect to HEVC are shown in italics in TABLE 4, and line numbers are added for ease of reference.

**TABLE 4**

| 1 | sao(rx, ry, *saoPass*){ | **Descriptor** |
|---|---|---|
| 2 | *if(saoPass* > *0*)*{* | |
| 3 | ***sao_type_idx_off*** | *ae(v)* |
| 4 | *}* | |
| 5 | *if(saoPass* == *0* ∥ *(saoPass* > *0 && !sao_type_idx_off)){* | |
| 6 | if(rx > 0){ | |
| 7 | leftCtbInSliceSeg = CtbAddrInRs > SliceAddrRs | |
| 8 | leftCtbInTile = TileId[CtbAddrInTs] == TileId[CtbAddrRsToTs[CtbAddrInRs - 1]] | |
| 9 | if(leftCtbInSliceSeg && leftCtbInTile) | |
| 10 | **sao_merge_left_flag** | ae(v) |
| 11 | } | |
| 12 | if(ry > 0 && !sao_merge_left_flag){ | |
| 13 | upCtbInSliceSeg = (CtbAddrInRs - PicWidthInCtbsY) >= SliceAddrRs | |
| 14 | upCtbInTile = TileId[CtbAddrInTs] == TileId[CtbAddrRsToTs[CtbAddrInRs - PicWidthInCtbsY]] | |
| 15 | if(upCtbInSliceSeg && upCtbInTile) | |
| 16 | **sao_merge_up_flag** | ae(v) |
| 17 | } | |
| 18 | if(!sao_merge_up_flag && !sao_merge_left_flag) | |
| 19 | for(cIdx = 0; cIdx < 3; cIdx++) | |
| 20 | { | |
| 21 | if((slice_sao_luma_flag && cIdx == 0) ∥ (slice_sao_chroma_flag && cIdx > 0)){ | |
| 22 | if(cIdx == 0) | |
| 23 | **sao_type_idx_luma** | ae(v) |
| 24 | else if(cIdx == 1)*{* | |
| 25 | **sao_type_idx_chroma** | ae(v) |
| 26 | *if(saoPass* > *0 && sao_type_idx_luma* **==** ***0**)* | |
| 27 | *sao*_*type*_*idx*_*chroma* += *1* | |
| 28 | *}* | |
| 29 | if(SaoTypeIdx[cIdx][rx][ry] != 0){ | |
| 30 | for(i = 0; i < 4; i++) | |
| 31 | **sao_offset_abs**[cIdx][rx][ry][i] | ae(v) |
| 32 | if(SaoTypeIdx[cIdx][rx][ry] == 1){ | |
| 33 | for(i = 0; i < 4; i++) | |
| 34 | if(sao_offset_abs[cIdx][rx][ry][i] != 0) | |
| 35 | **sao_offset_sign[**cIdx][rx][ry][i] | ae(v) |
| 36 | **sao_band_position**[cIdx][rx][ry] | ae(v) |
| 37 | } else { | |
| 38 | if(cIdx == 0) | |
| 39 | **sao**_**eo**_**class**_**luma** | ae(v) |
| 40 | if(cIdx == 1) | |
| 41 | **sao**_**eo**_**class**_**chroma** | ae(v) |
| 42 | } | |
| 43 | } | |
| 44 | } | |
| 45 | } | |
| 46 | *}* | |
| 47 | } | |

At the very beginning of TABLE 4, a decoder tests whether saoPass > 0, namely, whether the current pass is not the first pass. If the current SAO pass is not the first pass, the decoder decodes syntax element sao_type_idx_off from the bitstream. If syntax sao_type_idx_off indicates that the SAO filtering is turned off for both luma and chroma components in the current pass, then no other SAO syntax elements are decoded for the current pass.

That is, in this embodiment, the first SAO pass still first tests the merge modes, and then uses syntax elements sao_type_idx_luma and sao_type_idx_chroma to individually control whether the SAO filtering is turned off for the luma and chroma components. However, from the second pass on, another flag sao_type_idx_off is added to control whether the SAO filtering is turned off for both the luma and chroma components. The addition of sao_type_idx_off may introduce some overhead in the bitstream. However, when this flag is set to true, all other syntax elements for SAO are omitted, and thus may save some bits. Because the merge mode may be less frequently selected and more CTUs may turn off SAO filtering after the first pass, the probability that sao_type_idx_off is set to true may be high and thus justifies the addition of another flag for the subsequent pass(es).

In another embodiment, sao_type_idx_off may also be used for the first pass. However, since it may not be frequent for the SAO filtering to be turned off simultaneously for luma and chroma components in the first pass, adding this flag may not be efficient in the first pass.

FIG. 15 illustrates the changes in the parsing process corresponding to the changes in TABLE 4 for saoPass > 0. At step 1510, syntax element sao_type_idx_off is decoded. If sao_type_idx_off is true, then the decoder moves on to the next CTU. If sao_type_idx_off is false, the merge mode is tested and other SAO syntax elements may also be decoded. Steps 1530-1570 can be implemented similarly to steps 810-850 in FIG. 8B.

When the value of syntax element sao_type_idx_off is false (i.e., zero) and the value of sao_type_idx_luma is zero, the value of sao_type_idx_chroma is inferred to be non-zero, and the entropy coding of sao_type_idx_chroma is reduced since the possible values are 1 and 2, but necessarily not 0. This is because when sao_type_idx_off is false, at least one of the luma and chroma components applies the SAO filtering (namely, at least one of sao_type_idx_luma and sao_type_idx_chroma is not zero). Therefore from sao_type_idx_off = 0 and sao_type_idx_luma = 0, one can infer that sao_type_idx_chroma is not 0. Thus instead of coding sao_type_idx_chroma itself, we may code (sao_type_idx_chroma - 1) to save bits and add "1" back at the decoder side as shown in lines 26-27 of TABLE 4.

In the above with respect to TABLE 4 and FIG. 15, we mainly describe our proposed methods from the decoding side. The encoding side may be modified symmetrically to the decoding side. For example, in an encoding method corresponding to FIG. 15, step 1510 can be adjusted to encode sao_type_idx_off flag, steps 1530 and 1550 can be adjusted to encode the merge flags, and step 1570 can be adjusted to encode other SAO syntax elements.

Various embodiments are described for multi-pass SAO in the above. These embodiments may be used separately or in combination. For example, the embodiments as described in TABLE 2 and TABLE 4 can be combined as shown in TABLE 5.

**TABLE 5**

| sao(rx, ry, *saoPass*){ | **Descriptor** |
|---|---|
| *if((saoPass* == *0*) ∥ *((SaoTypeIdx[saoPass-1][0][rx][ry] !*= *0)* ∥ *(SaoTypeIdx[saoPass-1][1][rx][ry] !*= *0))){* | |
| *if(saoPass* > *0){* | |
| ***sao_type_idx_off*** | *ae(v)* |
| *}* | |
| *if(saoPass* == 0 ∥ *(saoPass* > *0 && !sao_type_idx_off)){* | |
| if(rx > 0) { | |
| leftCtbInSliceSeg = CtbAddrInRs > SliceAddrRs | |
| leftCtbInTile = TileId[CtbAddrInTs] == TileId[CtbAddrRsToTs[CtbAddrInRs - 1]] | |
| if(leftCtbInSliceSeg && leftCtbInTile) | |
| **sao_merge_left_flag** | ae(v) |
| } | |
| if(ry > 0 && !sao_merge_left_flag){ | |
| upCtbInSliceSeg = (CtbAddrInRs - PicWidthInCtbsY) >= SliceAddrRs | |
| upCtbInTile = TileId[CtbAddrInTs] == TileId[CtbAddrRsToTs[CtbAddrInRs - PicWidthInCtbsY]] | |
| if(upCtbInSliceSeg && upCtbInTile) | |
| **sao_merge_up_flag** | ae(v) |
| } | |
| *}* | |
| if(!sao_merge_up_flag && !sao_merge_left_flag) | |
| for(cIdx = 0; cIdx < 3; cIdx++) | |
| { | |
| *if((saoPass*==*0)* ∥ *(SaoTypeIdx[saoPass-1][cIdx][rx][ry] !*= *0)){* | |
| if((slice_sao_luma_flag && cIdx == 0) ∥ (slice_sao_chroma_flag && cIdx > 0)){ | |
| if(cIdx == 0) | |
| **sao_type_idx_luma** | ae(v) |
| else if (cIdx == 1)*{* | |
| **sao_type_idx_chroma** | ae(v) |
| *if(saoPass*>*0 && sao*_*type*_*idx*_*luma* == *0)* | |
| *sao*_*type*_*idx*_*chroma* += *1* | |
| *}* | |
| if(*SaoTypeIdx[saoPass]*[cIdx][rx][ry] != 0){ | |
| for(i = 0; i < 4; i++) | |
| **sao_offset_abs**[cIdx][rx][ry][i] | ae(v) |
| if(SaoTypeIdx*[saoPass]*[cIdx][rx][ry] == 1){ | |
| for(i = 0; i < 4; i++) | |
| if(sao_offset_abs[cIdx][rx][ry][i] != 0) | |
| **sao_offset_sign**[cIdx][rx][ry][i] | ae(v) |
| **sao_band_position**[cIdx][rx][ry] | ae(v) |
| } else { | |
| if(cIdx == 0) | |
| **sao_eo_class_luma** | ae(v) |
| if(cIdx == 1) | |
| **sao_eo_class_chroma** | ae(v) |
| } | |
| } | |
| } | |
| *}* | |
| *else {* | |
| *SaoTypeIdx[saoPass][cIdx][rx][ry]* = *0* | |
| *}* | |
| } | |
| *}* | |
| } | |

Similarly, the embodiments as shown in TABLE 3 and TABLE 4 can be combined. As described above, in different embodiments, the condition test at the second line of the syntax table may be removed to allow the merge mode test.

Various syntax elements are described above. It should be noted that the syntax elements may take other names in different embodiments. For example, in another standard, the syntax elements may use other descriptive names, while maintaining the same or similar meanings.

Various numeric values are used in the present application, for example, the number of categories (i.e., NC = 5). It should be noted that the specific values are for exemplary purposes and the present principles are not limited to these specific values. For example, when the above discussions use 8-bit YUV videos as examples to show that there are 32 bands or to show there are four categories with signaled offsets, the present principles can also be applied to different video formats, in other bit depths or color space, or different numbers of bands or categories.

In the above, encoding and decoding SAO parameters are performed at a CTU level. The present principles can also be applied when the SAO encoding and decoding are performed at a different level, for example, but not limited to, at a region with an adaptive size, at a slice level or at a picture level.

In the above, various embodiments are described with respect to the HEVC standard. For example, various methods of implementing multi-pass SAO filtering as described above can be used to modify the in-loop filtering module (165, 265) of the HEVC encoder and decoder as shown in FIG. 1 and FIG. 2. However, the present principles are not limited to HEVC, and can be applied to other standards, recommendations, and extensions thereof. The SAO filtering according to the present principles can also be applied as a general image processing method, for example, in image de-noising. The SAO filtering as described above is used after the de-blocking filtering. In other embodiments, the SAO filtering may be used alone, or together with other types of filters.

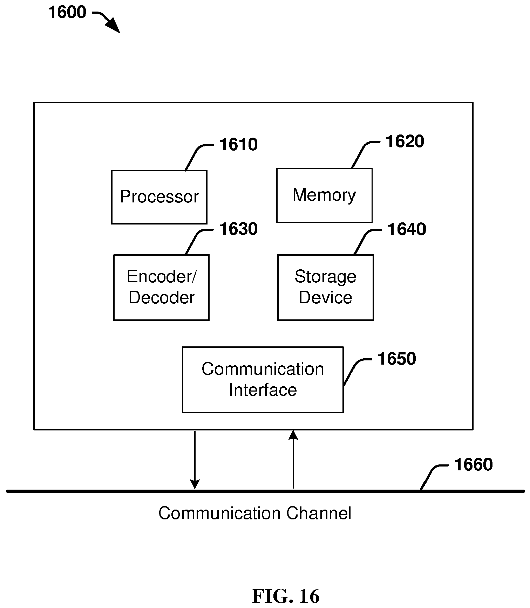

FIG. 16 illustrates a block diagram of an exemplary system in which various aspects of the exemplary embodiments of the present principles may be implemented. System 1600 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1600 may be communicatively coupled to other similar systems, and to a display via a communication channel as shown in FIG. 16 and as known by those skilled in the art to implement the exemplary video system described above.

The system 1600 may include at least one processor 1610 configured to execute instructions loaded therein for implementing the various processes as discussed above. Processor 1610 may include embedded memory, input output interface and various other circuitries as known in the art. The system 1600 may also include at least one memory 1620 (e.g., a volatile memory device, a non-volatile memory device). System 1600 may additionally include a storage device 1640, which may include non-volatile memory, including, but not limited to, EEPROM, ROM, PROM, RAM, DRAM, SRAM, flash, magnetic disk drive, and/or optical disk drive. The storage device 1640 may comprise an internal storage device, an attached storage device and/or a network accessible storage device, as non-limiting examples. System 1600 may also include an encoder/decoder module 1630 configured to process data to provide an encoded video or decoded video.

Encoder/decoder module 1630 represents the module(s) that may be included in a device to perform the encoding and/or decoding functions. Encoder 100 and decoder 200 may be used in encoder/decoder module 1630. As is known, a device may include one or both of the encoding and decoding modules. Additionally, encoder/decoder module 1630 may be implemented as a separate element of system 1600 or may be incorporated within processors 1610 as a combination of hardware and software as known to those skilled in the art.

Program code to be loaded onto processors 1610 to perform the various processes described hereinabove may be stored in storage device 1640 and subsequently loaded onto memory 1620 for execution by processors 1610. In accordance with the exemplary embodiments of the present principles, one or more of the processor(s) 1610, memory 1620, storage device 1640 and encoder/decoder module 1630 may store one or more of the various items during the performance of the processes discussed herein above, including, but not limited to the input video, the bitstream, equations, formula, matrices, variables, operations, and operational logic.

The system 1600 may also include communication interface 1650 that enables communication with other devices via communication channel 1660. The communication interface 1650 may include, but is not limited to a transceiver configured to transmit and receive data from communication channel 1660. The communication interface may include, but is not limited to, a modem or network card and the communication channel may be implemented within a wired and/or wireless medium. The various components of system 1600 may be connected or communicatively coupled together using various suitable connections, including, but not limited to internal buses, wires, and printed circuit boards.

The exemplary embodiments according to the present principles may be carried out by computer software implemented by the processor 1610 or by hardware, or by a combination of hardware and software. As a non-limiting example, the exemplary embodiments according to the present principles may be implemented by one or more integrated circuits. The memory 1620 may be of any type appropriate to the technical environment and may be implemented using any appropriate data storage technology, such as optical memory devices, magnetic memory devices, semiconductor-based memory devices, fixed memory and removable memory, as non-limiting examples. The processor 1610 may be of any type appropriate to the technical environment, and may encompass one or more of microprocessors, general purpose computers, special purpose computers and processors based on a multi-core architecture, as non-limiting examples.

Various methods are described above, and each of the methods comprises one or more steps or actions for achieving the described method. Unless a specific order of steps or actions is required for proper operation of the method, the order and/or use of specific steps and/or actions may be modified or combined.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of encoding or decoding a video, comprising:
applying a first pass of Sample Adaptive Offset (SAO) filtering to a block of a picture of the video; and
determining (1510) whether a second pass of SAO filtering is to be turned off for the block of the picture,
wherein a first syntax flag is used to signal whether the second pass of SAO filtering is turned off for both luma and chroma components of the block.

2. The method of claim 1, wherein a second syntax flag is used to signal whether the second pass of SAO filtering is turned off for the luma component of the block and a third syntax flag is used to signal whether the second pass of SAO filtering is turned off for the chroma components of the block.

3. The method of claim 1 or 2, wherein the first syntax flag is not available for use in the first pass of SAO filtering to signal whether the first pass of SAO filtering is turned off for both luma and chroma components of the block.

4. The method of any one of claims 1-3, wherein signaling of syntax elements related to SAO filtering is omitted in the second pass of SAO filtering when the second pass of SAO filtering is turned off for both luma and chroma components of the block.

5. The method of claim 4, wherein syntax elements indicating merge mode and SAO offsets are not signaled in a bitstream.

6. The method of any one of claims 2-5, wherein the third syntax flag is inferred to be non-zero, when the first syntax flag indicates that the second pass of SAO filtering is not turned off for both luma and chroma components and the second syntax flag is zero.

7. The method of claim 6, wherein a value corresponding to the third syntax flag is the third syntax flag plus 1, the value corresponding to the third syntax flag controlling a SAO type of the chroma components of the block.

8. An apparatus of encoding or decoding a video, comprising:
means for applying a first pass of Sample Adaptive Offset (SAO) filtering to a block of a picture of the video; and
means for determining (1510) whether a second pass of SAO filtering is to be turned off for the block of the picture,
wherein a first syntax flag is used to signal whether the second pass of SAO filtering is turned off for both luma and chroma components of the block.

9. The apparatus of claim 8, wherein a second syntax flag is used to signal whether the second pass of SAO filtering is turned off for the luma component of the block and a third syntax flag is used to signal whether the second pass of SAO filtering is turned off for the chroma components.

10. The apparatus of claim 8 or 9, wherein the first syntax flag is not available for use in the first pass of SAO filtering to signal whether the first pass of SAO filtering is turned off for both luma and chroma components of the block.

11. The apparatus of any one of claims 8-10, wherein signaling of syntax elements related to SAO filtering is omitted in the second pass of SAO filtering when the second pass of SAO filtering is turned off for both luma and chroma components of the block.

12. The apparatus of any one of claims 9-11, wherein the third syntax flag is inferred to be non-zero, when the first syntax flag indicates that the second pass of SAO filtering is not turned off for both luma and chroma components of the block and the second syntax flag is zero.

13. The apparatus of claim 12, wherein a value corresponding to the third syntax flag is the third syntax flag plus 1, the value corresponding to the third syntax flag controlling a SAO type of the chroma components of the block.

14. A bitstream formatted to include:
an encoding of a block of a picture of the video;
an encoding of one or more syntax elements used for a first pass of Sample Adaptive Offset (SAO) filtering for the block of the picture; and
an encoding of a first syntax flag used to signal whether the second pass of SAO filtering is turned off for both luma and chroma components of the block.

15. A computer program comprising software code instructions for performing the method according to any one of claims 1-7 when the computer program is executed by one or more processors.
